# EUROPEAN PATENT APPLICATION

(11) **EP 3 208 422 A1**
(43) Date of publication of application: **23.08.2017**
(21) Application number: 17155651.7
(22) Date of filing: 10.02.2017
(51) Int. Cl.: F01D 5/18

(54) **AIRFOIL HAVING CROSSOVER HOLES**

(30) Priority: 16.02.2016 US 201615044775
(71) Applicant: General Electric Company, Schenectady, NY 12345 (US)
(72) Inventor: BUNKER, Ronald Scott, Schenectady, NY New York 12345 (US); BRIGGS, Robert David, Schenectady, NY New York 12345 (US)
(74) Representative: Williams, Andrew Richard

(57) **Abstract**

The invention is related to cooling of a hollow airfoil (78) for a turbine engine (10) having first and second radially extending cooling chambers (122,126) separated by a radially extending rib (130) in which rows (140,142) of crossover holes (132,134) pass through the rib (130) and fluidly couple the first and second chambers (122,126). The bore axes (136,138) of the crossover holes (132,134) are inclined at a non-orthogonal angle (□) with respect to the centerline of the rib (130). Thus, cooling flow impinges on the inner side of suction and pressure surface (100,98) in the leading edge internal chamber (126) for efficiently cooling the leading edge (102) region of the airfoil (78). The crossover holes (132,134) are preferably arranged in staggered rows (140,142) extending in spanwise direction, wherein the shape of the crossover holes (132,134) may be circular or elliptical.

## Description

Turbine engines, and particularly gas or combustion turbine engines, are rotary engines that extract energy from a flow of combusted gases passing through the engine onto a multitude of rotating turbine blades. Turbine engines have been used for land and nautical locomotion and power generation, but are most commonly used for aeronautical applications such as for aircraft, including helicopters. In aircraft, turbine engines are used for propulsion of the aircraft. In terrestrial applications, turbine engines are often used for power generation.

Turbine engines for aircraft are designed to operate at high temperatures to maximize engine efficiency, so cooling of certain engine components, such as the high pressure turbine and the low pressure turbine, can be beneficial. Typically, cooling is accomplished by ducting cooler air from the high and/or low pressure compressors to the engine components that require cooling. Temperatures in the high pressure turbine are around 1000 °C to 2000 °C and the cooling air from the compressor is around 500 °C to 700 °C. While the compressor air is a high temperature, it is cooler relative to the turbine air, and can be used to cool the turbine.

Contemporary turbine blades generally include one or more interior cooling circuits for routing the cooling air through the blade to cool different portions of the blade, and can include dedicated cooling circuits for cooling different portions of the blade, such as the leading edge, trailing edge and tip of the blade.

An airfoil for a turbine engine the airfoil comprising a perimeter wall bounding an interior and defining a pressure side and a suction side, extending axially between a leading edge and a trailing edge and extending radially between a root and a tip is thus provided. A radially extending rib located within the interior and extending between the suction and pressure sides, a radially extending leading edge chamber bound by the leading edge, rib and the suction and pressure sides, a radially extending inner chamber bound in part by the rib, a plurality of film holes passing through the leading edge, first and second radially extending rows of crossover holes passing through the rib and fluidly coupling the leading edge and inner chambers, with the holes of the first row being radially offset from the holes of the second row, and a subset of the holes being angled to define a flow path intersecting one of the pressure and suctions side.

A method of providing cooling air to a leading edge chamber adjacent a leading edge of an airfoil having a row of film openings extending along and passing through the leading edge, the method comprising generating radially spaced swirls of cooling air in the leading edge chamber is also provided.

An airfoil for a turbine engine is provided, the airfoil comprising a perimeter wall bounding an interior and defining a pressure side and a suction side, extending axially between a leading edge and a trailing edge and extending radially between a root and a tip, first and second radially extending cooling chambers; a radially extending rib separating the first and second cooling chambers, and first and second radially extending rows of crossover holes passing through the rib and fluidly coupling the first and second chambers, with the holes of the first row being radially offset from the holes of the second row, and a subset of the holes being angled to define a flow path intersecting one of the pressure and suctions sides.

In the drawings:
Figure 1 is a schematic cross-sectional diagram of a turbine engine for an aircraft.
Figure 2 is a perspective view of an engine component in the form of a turbine blade of the engine of Figure 1 with cooling air inlet passages.
Figure 3 is a cross-sectional view of the airfoil of Figure 2.
Figure 4 is a diagram view of a plurality of internal passages disposed within the cross-sectional view of the airfoil of Figure 3.
Figure 5 is an enlarged view of a leading edge of the airfoil of Figure 4 including crossover holes.
Figure 6 is an enlarged view of a second embodiment of a leading edge of the airfoil of Figure 4 including crossover holes.
Figure 7 is a perspective view of the concave arcuate rib of Figure 5.
Figure 8 is front view of the concave arcuate rib of Figure 5.

The described embodiments of the present invention are directed to an airfoil and in particular to cooling an airfoil. For purposes of illustration, the present invention will be described with respect to a turbine blade for an aircraft turbine engine. It will be understood, however, that the invention is not so limited and can have general applicability in non-aircraft applications, such as other mobile applications and non-mobile industrial, commercial, and residential applications. It can also have application to airfoils, other than a blade, in a turbine engine, such as stationary vanes.

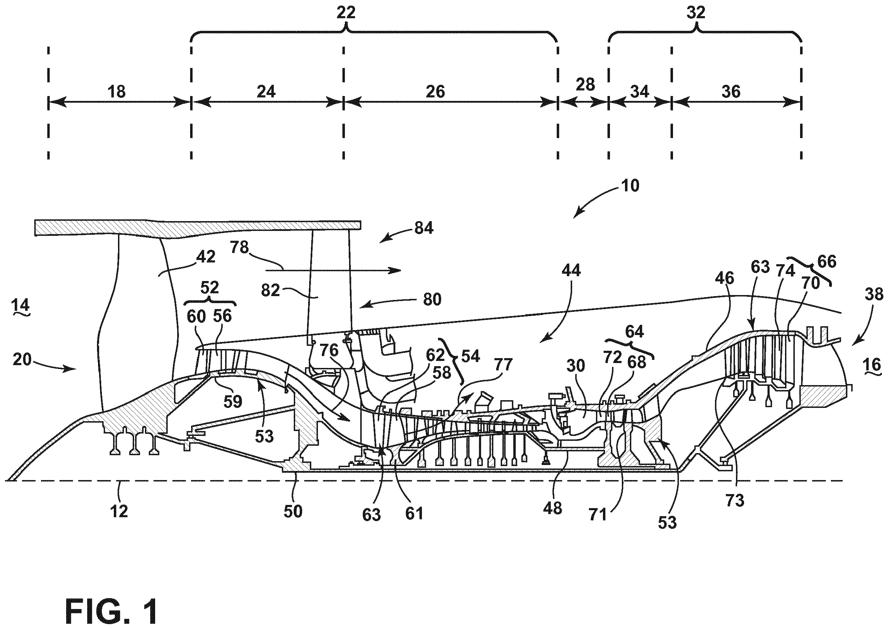

Figure 1 is a schematic cross-sectional diagram of a turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating blades 56, 58. It is noted that the number of blades, vanes, and compressor stages shown in Figure 1 were selected for illustrative purposes only, and that other numbers are possible.

The blades 56, 58 for a stage of the compressor can be mounted to a disk 59, which is mounted to the corresponding one of the HP and LP spools 48, 50, with each stage having its own disk 59, 61. The vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine vanes 72, 74 can be provided in a ring and can extend radially outwardly relative to the centerline 12, while the corresponding rotating blades 68, 70 are positioned downstream of and adjacent to the static turbine vanes 72, 74 and can also extend radially outwardly relative to the centerline 12, from a blade platform to a blade tip. It is noted that the number of blades, vanes, and turbine stages shown in Figure 1 were selected for illustrative purposes only, and that other numbers are possible.

The blades 68, 70 for a stage of the turbine can be mounted to a disk 71, which is mounted to the corresponding one of the HP and LP spools 48, 50, with each stage having its own disk 71, 73. The vanes 72, 74 for a stage of the compressor can be mounted to the core casing 46 in a circumferential arrangement.

The portions of the engine 10 mounted to and rotating with either or both of the spools 48, 50 are also referred to individually or collectively as a rotor 53. The stationary portions of the engine 10 including portions mounted to the core casing 46 are also referred to individually or collectively as a stator 63.

In operation, the airflow exiting the fan section 18 is split such that a portion of the airflow is channeled into the LP compressor 24, which then supplies pressurized ambient air 76 to the HP compressor 26, which further pressurizes the ambient air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

A remaining portion of the airflow 75 bypasses the LP compressor 24 and engine core 44 and exits the engine assembly 10 through a stationary vane row, and more particularly an outlet guide vane assembly 80, comprising a plurality of airfoil guide vanes 82, at the fan exhaust side 85. More specifically, a circumferential row of radially extending airfoil guide vanes 82 are utilized adjacent the fan section 18 to exert some directional control of the airflow 75.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally the combustor 30 and components downstream of the combustor 30, especially the turbine section 32, with the HP turbine 34 being the hottest portion as it is directly downstream of the combustion section 28. Other sources of cooling fluid can be, but is not limited to, fluid discharged from the LP compressor 24 or the HP compressor 26. This fluid can be bleed air 77 which can include air drawn from the LP or HP compressors 24, 26 that bypasses the combustor 30 as cooling sources for the turbine section 32. This is a common engine configuration, not meant to be limiting.

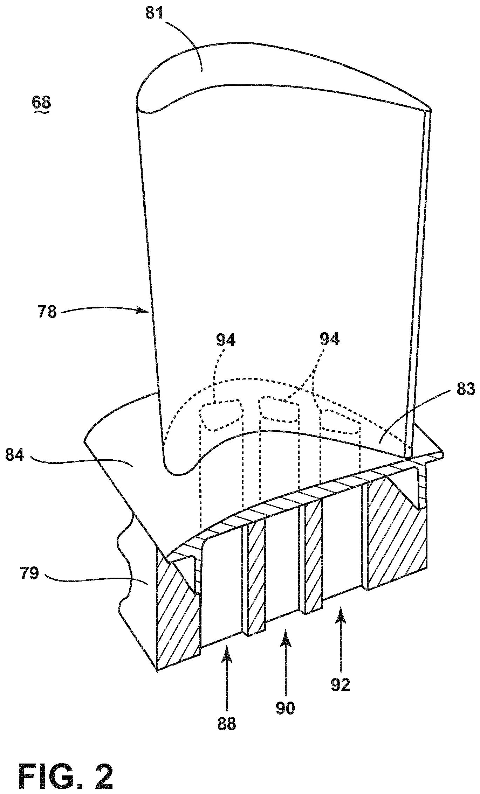

Figure 2 is a perspective view of an engine component in the form of one of the turbine blades 68 of the engine 10 from Figure 1. The turbine blade 68 includes a dovetail 79 and an airfoil 78. The airfoil 78 extends radially between a root 83 and a tip 81. The dovetail 79 further includes a platform 84 integral with the airfoil 78 at the root 83, which helps to radially contain the turbine air flow. The dovetail 79 can be configured to mount to a turbine rotor disk on the engine 10. The dovetail 79 comprises at least one inlet passage, exemplarily shown as a first inlet passage 88, a second inlet passage 90, and a third inlet passage 92, each extending through the dovetail 79 to provide internal fluid communication with the airfoil 78 at a passage outlet 94. It should be appreciated that the dovetail 79 is shown in cross-section, such that the inlet passages 88, 90, 92 are housed within the body of the dovetail 79.

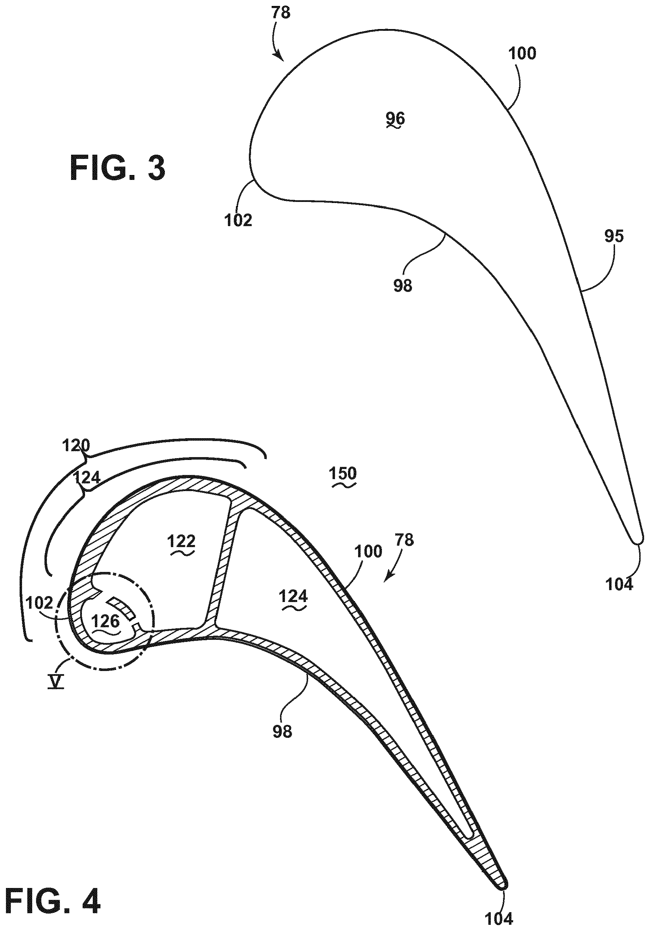

Turning to Figure 3, the airfoil 78, shown in cross-section, comprises a perimeter wall 95 bounding an interior 96 having a concave-shaped pressure side 98 and a convex-shaped suction side 100 which are joined together to define an airfoil shape extending axially between a leading edge 102 and a trailing edge 104. The blade 68 rotates in a direction such that the pressure side 98 follows the suction side 100. Thus, as shown in Figure 3, the airfoil 78 would rotate upward toward the top of the page.

The airfoil 78 comprises a plurality of internal passages which can be arranged to form one or more cooling circuits dedicated to cool a particular portion of the blade 68. The passages and the corresponding cooling circuits are illustrated in Figure 4, which is a cross-sectional view of the airfoil 78. It should be appreciated that the respective geometries of each individual passage within the airfoil 78 as shown is exemplary, each depicting one or more elements of passages forming cooling circuits and should not limit the airfoil to the geometries, dimensions, or positions as shown.

The cooling circuits can be defined by one or more passages extending radially within the airfoil 78. It should be appreciated that the passages can comprise one or more film holes which can provide fluid communication between the particular passage and the external surface of the airfoil 78, providing a film of cooling fluid along the external surface of the airfoil 78.

A cooling circuit shown as a leading edge cooling circuit 120 comprises a plurality of passages disposed within the interior of the airfoil 78. The leading edge cooling circuit 120 includes at least two radially extending cooling chambers comprising an inner chamber 122 and a leading edge chamber 126. The leading edge chamber 126 includes a row of film openings (not shown) extending along and passing through the leading edge 102. The inner chamber 122 radially extends fromroot 83 to tip 81, being in fluid communication with an inlet in the dovetail 79 such as the first inlet passage 88.

The leading edge chamber 126 is also in fluid communication with the inner chamber 122, radially extending from root 83 to tip 81 and disposed adjacent to the leading edge 102. A radially extending rib 130, located within the interior 96, is disposed between and partially defines the inner chamber 122 and the leading edge chamber 126. The rib 130 spans the interior 96 of the airfoil 78, extending between the pressure side 98 and the suction side 100. The rib 130 can be straight or curved. The leading edge chamber 126 is in fluid communication with the inner chamber 122 via one or more crossover holes 132, 134 disposed within the rib 130, extending from root 83 to tip 81.

The interior 96 of the airfoil 78 can further comprise one or more additional cooling circuits defined by one or more internal passages 124 comprising mesh passages, pin banks, slots, crossover holes, and a plurality of film holes, providing cooling fluid throughout the airfoil 78 or exhausting cooling fluid from the airfoil 78 to provide a cooling film to the exterior of the airfoil 78. The internal passages 124 extend in a root 83 to tip 81 or tip 81 to root 83 direction and can be interconnected with one another such that one or more cooling circuits are defined.

It should be appreciated that the leading edge cooling circuit 120 can implement one or more of the ribs 130 along the span-wise length of the airfoil 78 extending between the root 83 and the tip 81 of the airfoil 78. It should be understood that the leading edge cooling passages can comprise a plurality of film holes extending between the exterior of the airfoil 78 and the leading edge chamber 126, such that a cooling fluid can be provided as a cooling film to the exterior surface of the airfoil 78.

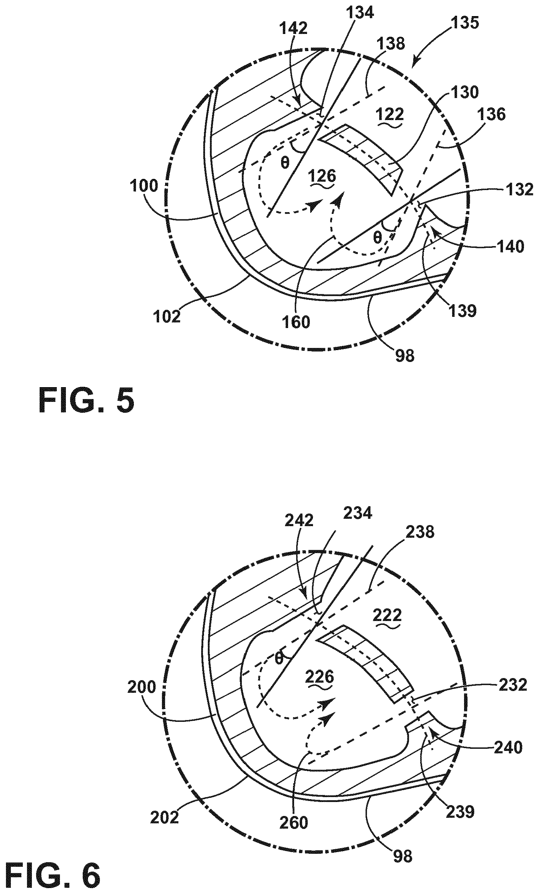

Turning to Figure 5, an enlarged view of the leading edge chamber 126 illustrates the cross-sectional shape of the rib 130. The rib 130 comprises a concave, arcuate shape with respect to the leading edge chamber 126 having a substantially equivalent width defined along the cross-sectional arcuate length of the rib 130. The crossover holes 132, 134 fluidly couple the inner chamber 122 to the leading edge chamber 126 along the radial, span-wise length of the rib 130, extending between the root 83 and the tip 81.

The crossover holes 132, 134 pass through the rib 130 and a subset of the holes 135 can be angled to define a flow path 136, 138 intersecting one of the pressure and suction sides 98, 100. In an exemplary embodiment, the subset of holes 135 is angled to define the flow path 136 that intersects the pressure side 98 and angled to define the flow path 138 that intersects the suction side 100. In this way, none of the flow paths 136, 138 intersect the leading edge 102. The flow path 136, 138 is oriented at an angle θ measured from an orientation normal to a local centerline 139 of the rib 130 towards the pressure or suction side 98, 100 where the angle θ is less than 90° and where the angle associated with flow path 136 is not necessarily equal to the angle associated with flow path 138.

Other embodiments of the subset of holes are contemplated in Figure 6. These embodiments are similar to the first embodiment, therefore, like parts will be identified with like numerals increasing by 100, with it being understood that the description of the like parts of the first embodiment applies to the additional embodiments, unless otherwise noted.

Figure 6 depicts a subset of holes 235 angled to define a flow path 238 that intersects the suction side 200. In this embodiment the subset of holes 235 can include crossover holes 232 that define a flow path 236 oriented normal to a centerline 239 the suction side 200 or the pressure side 298 depending on the location of the crossover hole 232 within the rib 230. A similar embodiment could include can include crossover holes 232 angled while crossover holes 234 define a flow path normal to the centerline 239.

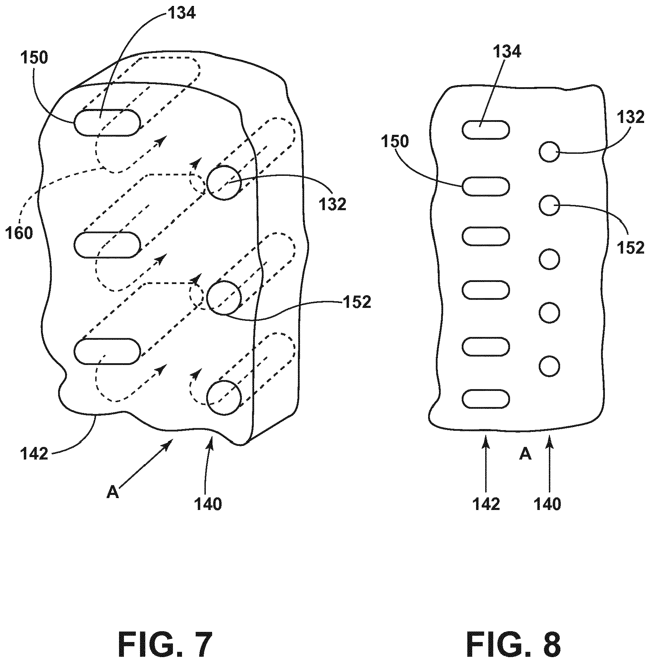

Turning to Figures 7 and 8 a section of the rib 130 illustrates the placement and orientation of the crossover holes 132, 134. First and second radially extending rows 140, 142 of crossover holes 132, 134 are radially offset from the other. In an exemplary embodiment, the rows have different shapes, for example an elliptic 150 and round shape 152. The shape of the hole is not limited to these shapes and can be any jet shaping including racetrack. The area of the crossover holes can vary as well where alternating sets of the crossover holes have differing areas or all share the same area. In all of the embodiments described herein at least one row, or every other alternating hole in at least one row is angled.

Other embodiments of the subset of holes include the subset of holes being alternating holes of the first and second rows or alternating holes of one of the first and second rows. In any of the embodiments herein the crossover holes could define a flow path that does not intersect with the leading edge or any of the film holes. Other embodiments as taught in the prior art include rounded edges for the holes and also some amount of radial angle of the hole centerline.

The angled orientation of the crossover holes enables a method for providing cooling air to the leading edge chamber 126 by generating radially spaced swirls 160 of cooling air in the leading edge chamber 126. The orientation of the crossover holes 132, 134 promotes swirling 160 in different directions of rotation including alternating radial locations that can be staggered from each other. Radially extending rows of oppositely swirling cooling air are created extending from the tip 81 to the root 83.

Benefits provided by the embodiments herein include increasing swirl to reduce dust accumulation. Alternating the placement of angled crossover holes creates impinging jets of cooling air that do not interfere with each other. By eliminating dust accumulation within airfoil cooling passages, and especially HP turbine stage one blades, service life of these parts can be increased by 50%, as well as increasing time on wing.

Processes for manufacturing the embodiments herein can include additive manufacturing.

This written description uses examples to disclose the invention, including the preferred mode, and to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An airfoil for a turbine engine, the airfoil comprising:
   a perimeter wall bounding an interior and defining a pressure side and a suction side, extending axially between a leading edge and a trailing edge and extending radially between a root and a tip;
   a radially extending rib located within the interior and extending between the suction and pressure sides;
   a radially extending leading edge chamber bound by the leading edge, rib and the suction and pressure sides;
   a radially extending inner chamber bound in part by the rib;
   a plurality of film holes passing through the leading edge;
   first and second radially extending rows of crossover holes passing through the rib and fluidly coupling the leading edge and inner chambers, with the holes of the first row being radially offset from the holes of the second row, and a subset of the holes being angled to define a flow path intersecting one of the pressure and suctions sides.
2. The airfoil of clause 1, wherein the subset of holes comprises the holes of one of the first and second rows.
3. The airfoil of any preceding clause, wherein the subset of holes comprises alternating holes of the first and second rows.
4. The airfoil of any preceding clause, wherein the subset of holes comprises alternating holes of one of the first and second rows.
5. The airfoil of any preceding clause, wherein the subset of holes comprises the first row angled to define a flow path that intersects the pressure side and the second row angled to define a flow path that intersects the suction side.
6. The airfoil of any preceding clause, wherein none of the holes define a flow path that intersects the leading edge.
7. The airfoil of any preceding clause, wherein none of the holes define a flow path that intersects the film holes.
8. The airfoil of any preceding clause, wherein the angle of the subset of holes is less than 90° degrees relative to an orientation normal to a centerline for the rib.
9. The airfoil of any preceding clause, wherein the first and second rows of holes have different shapes.
10. The airfoil of any preceding clause, wherein the first and second rows of holes have different areas.
11. The airfoil of any preceding clause, wherein the rib is straight or curved.
12. A method of providing cooling air to a leading edge chamber adjacent a leading edge of an airfoil having a row of film openings extending along and passing through the leading edge, the method comprising generating radially spaced swirls of cooling air in the leading edge chamber.
13. The method of any preceding clause, wherein the radially spaced swirls of cooling air comprise swirls having different directions of rotation.
14. The method of any preceding clause, wherein the swirls of different directions of rotation are alternate in the radial direction.
15. The method of any preceding clause, wherein the swirls of different directions of rotation are radially staggered from each other.
16. The method of any preceding clause, wherein the swirls of a first direction of rotation define a first radially extending row and the swirls of a second direction of rotation, different from the first direction of rotation, define a second radially extending row.
17. An airfoil for a turbine engine, the airfoil comprising:
   a perimeter wall bounding an interior and defining a pressure side and a suction side, extending axially between a leading edge and a trailing edge and extending radially between a root and a tip;
   first and second radially extending cooling chambers;
   a radially extending rib separating the first and second cooling chambers; and
   first and second radially extending rows of crossover holes passing through the rib and fluidly coupling the first and second cooling chambers, with the holes of the first row being radially offset from the holes of the second row, and a subset of the holes being angled to define a flow path intersecting one of the pressure and suctions sides.
18. The airfoil of any preceding clause, wherein the subset of holes comprises the holes of one of the first and second rows.
19. The airfoil of any preceding clause, wherein the subset of holes comprises alternating holes of the first and second rows.
20. The airfoil of any preceding clause, wherein the subset of holes comprises alternating holes of one of the first and second rows.
21. The airfoil of any preceding clause, wherein the subset of holes comprises the first row angled to define a flow path that intersects the pressure side and the second row angled to define a flow path that intersects the suction side.
22. The airfoil of any preceding clause, wherein the first and second rows of holes have different shapes.
23. The airfoil of any preceding clause, wherein the first and second rows of holes have different areas.
24. The airfoil of any preceding clause, wherein the rib is straight or curved.

## Claims

1. An airfoil (78) for a turbine engine (10), the airfoil (78) comprising:
a perimeter wall (95) bounding an interior (96) and defining a pressure side (98) and a suction side (100), extending axially between a leading edge (102, 202) and a trailing edge (104, 204) and extending radially between a root (83) and a tip (81);
a radially extending rib (130, 230) located within the interior (96) and extending between the suction and pressure sides (98, 100);
a radially extending leading edge chamber (126, 226) bound by the leading edge, rib (130, 230) and the suction and pressure sides (98, 100);
a radially extending inner chamber (122, 222) bound in part by the rib (130, 230);
a plurality of film holes passing through the leading edge;
first and second radially extending rows of crossover holes (132, 134, 232, 234) passing through the rib (130, 230) and fluidly coupling the leading edge and inner chambers (122, 126, 222, 226), with the holes (132, 232) of the first row (140, 240) being radially offset from the holes (134, 234) of the second row (142, 242), and a subset of the holes (132, 134, 232, 234) being angled to define a flow path (136, 138, 236, 238) intersecting one of the pressure and suctions sides (98, 100).

2. The airfoil (78) of claim 1, wherein the subset of holes (132, 134, 232, 234) comprises the holes of one of the first and second rows (140, 142, 240, 242).

3. The airfoil (78) of any preceding claim, wherein the subset of holes (132, 134, 232, 234) comprises alternating holes of the first and second rows (140, 142, 232, 234).

4. The airfoil (78) of any preceding claim, wherein the subset of holes (132, 134, 232, 234) comprises alternating holes of one of the first and second rows (140, 142, 240, 242).

5. The airfoil (78) of any preceding claim, wherein the subset of holes (132, 134, 232, 234) comprises the first row (140, 240) angled to define a flow path (136, 236) that intersects the pressure side (98) and the second row (142, 242) angled to define a flow path (138, 238) that intersects the suction side (100).

6. The airfoil (78) of claim 5, wherein none of the holes (132, 134, 232, 234) define a flow path (136, 138, 236, 238) that intersects the leading edge (102).

7. The airfoil (78) of claim 5 or claim 6, wherein none of the holes (132, 134, 232, 234) define a flow path (136, 138, 236, 238) that intersects the film holes.

8. The airfoil (78) of any preceding claim, wherein the angle of the subset of holes is less than 90° degrees relative to an orientation normal to a centerline (139, 239) for the rib (130, 230).

9. The airfoil (78) of any preceding claim, wherein the first and second rows of holes (140, 142, 240, 242) have different shapes (150, 152, 250, 252).

10. The airfoil (78) of any preceding claim, wherein the first and second rows of holes (140, 142, 240, 242) have different areas.
